# EUROPÄISCHE PATENTSCHRIFT

(11) **EP 3 309 046 B1**
(45) Veröffentlichungstag und Bekanntmachung des Hinweises auf die Patenterteilung: **30.09.2020**
(21) Anmeldenummer: 17195487.8
(22) Anmeldetag: 09.10.2017
(51) Int. Cl.: B62D 25/10, B60R 21/34

(54) **FRONTKLAPPE, FAHRZEUG MIT EINER DERARTIGEN FRONTKLAPPE SOWIE VERFAHREN ZUR HERSTELLUNG DERSELBEN**
FRONT SHUTTER, VEHICLE WITH SUCH A FRONT SHUTTER AND METHOD FOR PRODUCING THE SAME
CAPOT AVANT, VÉHICULE MUNI D'UN TEL CAPOT AVANT AINSI QUE PROCÉDÉ DE FABRICATION D'UN CAPOT AVANT

(30) Priorität: 14.10.2016 DE 102016220153
(43) Veröffentlichungstag der Anmeldung: 18.04.2018
(73) Patentinhaber: Sika Technology AG, 6340 Baar (CH); VOLKSWAGEN AKTIENGESELLSCHAFT, 38440 Wolfsburg (DE)
(72) Erfinder: Cordes, Jürgen, 38108 Braunschweig (DE); Bierbaum, Julia, 38102 Braunschweig (DE); Kind, Torsten, 38524 Sassenburg (DE); Böttcher, Knut, 38162 Hordorf (DE); Rafalski, Lukas, 38104 Braunschweig (DE); Kornacki, Zdislaw, 61130 Niderrau (DE); Schwab, Frederick, 60594 Frankfurt (DE); Riebel, Stephan, 55294 Bodenheim (DE); Hardt, Christian, 65451 Kelsterbach (DE)
(74) Vertreter: Sika Patent Attorneys

(56) Entgegenhaltungen:
- EP-A1- 1 844 993
- CN-A- 106 114 644
- DE-A1- 10 038 430
- DE-A1-102008 034 132
- DE-A1-102012 216 545

## Beschreibung

Die Erfindung betrifft eine Frontklappe für ein Fahrzeug, insbesondere Kraftfahrzeug, nach dem Oberbegriff des Patentanspruchs 1 der Erfindung. Gemäß Anspruch 11 der Erfindung betrifft dieselbe ferner ein Fahrzeug, insbesondere Kraftfahrzeug, mit einer derartigen Frontklappe. Gemäß Anspruch 12 der Erfindung betrifft dieselbe schließlich auch ein Verfahren zur Herstellung besagter Frontklappe.

Kollidiert ein Kraftfahrzeug frontal mit einem Fußgänger, kann derselbe von der Stoßstange erfasst werden und nachfolgend mit dem Oberkörper bzw. dem Kopf auf insbesondere der Frontklappe, auch als Motorhaube bezeichnet, aufschlagen, wodurch in der Folge mit Körperschäden zu rechnen ist. Aufgrund dessen hat die fahrzeugherstellende Industrie umfangreiche Anstrengungen unternommen, um diesem nachteiligen Umstand zu begegnen und die Körperschäden des Fußgängers maßgeblich zu minimieren. Grundsätzlich ist dabei die erforderliche Grundsteifigkeit der Frontklappe in Einklang mit einem möglichst hohen Fußgängerschutz zu bringen. Die sogenannte Kopfaufschlagprüfung ist hierbei ein wichtiges Prüfkriterium. Ziel ist es, einen möglichst niedrigen HIC-Wert (HIC = Head Injury Criterion) zu erhalten. Insoweit ist es bereits bekannt, die Frontklappe lokal in vorbestimmten Bereichen derselben so auszubilden, dass diese im Falle eines etwaigen Zusammenstoßes mit einem Fußgänger möglichst schonend für denselben Aufprallenergie absorbiert. Diese Bereiche werden mit Aufprallvorrichtungen mit den Kopf eines Fußgängers simulierenden Impaktoren, auch als Kopfkugel bezeichnet, durch Aufprallversuche ermittelt, in denen die Impaktoren mit bestimmter Geschwindigkeit auf die vorbestimmten Bereiche geschossen werden. Um mit zielgerichteten Maßnahmen ein Fahrzeug fußgängerfreundlich auslegen zu können, werden anhand eines optimalen Verzögerungsverlaufs die relevanten geometrischen und Materialparameter der Motorhaube bewertet. Dieser optimale Verzögerungsverlauf ermöglicht es mit einem praktisch erreichbaren Kraft/Weg-Verlauf die Impaktorenergie mit möglichst kleinem Deformationsweg umzuwandeln. Es hat sich ergeben, dass neben diesem Deformationsweg die geometrische Steifigkeit der Motorhaube, die Massenträgheit und die Streckgrenze der Materialien für den Kraft/Weg-Verlauf des Impaktors bestimmend sind.

Herkömmlich wurden Frontklappen aus einem Stahlblech gefertigt. Seit geraumer Zeit werden besagte Frontklappen auch aus Aluminium oder einer Aluminiumlegierung gefertigt, woraus insbesondere Gewichtseinsparungen resultieren. In umfangreichen Versuchen wurde gefunden, dass sich im Rahmen besagter Kopfaufschlagprüfung bei Frontklappenblechen aus Aluminium bzw. einer Aluminiumlegierung schlechtere Werte bzgl. HIC und Deformationsweg ergeben als bei Frontklappenblechen aus Stahl. Ursache hierfür ist die zu geringe träge Masse der Frontklappenbleche aus Aluminium bzw. einer Aluminiumlegierung, da die träge Masse der Hauptfaktor für die Abbremsung des Impaktors innerhalb der ersten 4 ms ist. Im Hinblick darauf zeigt 7 (Stand der Technik) zum besseren Verständnis ein Diagramm mit drei Beschleunigungs (a)-Zeit (t)-Kurven A, B, C, auch Kopfimpakterbeschleunigungskurven bezeichnet, wobei die Kurve A ein Frontklappenblech aus Stahl und die Kurven B und C jeweils ein Frontklappenblech aus einer bestimmten Aluminiumlegierung betreffen. Die optimale Höhe des ersten Beschleunigungspeaks, hervorgerufen durch besagte Massenträgheit des Frontklappenbleches, liegt bei 170 g. Optimaler Weise liegen der erste Beschleunigungspeak zum zweiten Beschleunigungspeak im Verhältnis 2/3 zu 1/3. Das ist wie aus 7 ersichtlich bei dem Frontklappenblech aus Stahl (Kurve A) der Fall. Demgegenüber ist der 7 auch zu entnehmen, dass der erste Peak der Frontklappenbleche aus einer Aluminiumlegierung (Kurven B und C) unter dem des Stahlbleches liegt. Darüber hinaus liegt der zweite Peak der Frontklappenbleche aus einer Aluminiumlegierung höher als deren erster Peak. Hieraus ergibt sich der oben erwähnte Vorteil von Frontklappen aus Stahl.

Um Frontklappen bzgl. eines etwaigen Kopfaufschlages zu optimieren, gibt der Stand der Technik vielfältige Hinweise. So beschreibt die DE 10 2008 034 132 A1 eine Motorhaubenanordnung für ein Fahrzeug mit einer Energie absorbierenden inneren Polsterstruktur aus z.B. einem Kunststoffmaterial. Die Polsterstruktur umfasst eine obere Schicht oder Abdeckung, eine vertiefte Lage und eine untere Schicht oder innere Haut. Die besagte vertiefte Lage weist eine Vielzahl von vielflächigen Höckern bzw. Polsterhöckern auf. Die obere Schicht ist an einer inneren Fläche eines Motorhauben-Außenblechs aus Kunststoff oder Metall, wie Stahl oder Aluminium, befestigt. Die Höcker sollen geeignet sein, Eindrückbelastungen, die auf die Motorhaubenanordnung übertragen werden, und resultierende Kräfte, die auf ein Objekt übertragen werden und aus einem Zusammenprall zwischen dem Objekt und der Motorhaubenanordnung resultieren, zu absorbieren und zu dämpfen. Darüber hinaus ist es zur Optimierung der Kopfaufschlagergebnisse (HIC) bereits bekannt, die Massenträgheit zumindest der vorbestimmten Bereiche eines etwaigen Kopfaufpralls zu erhöhen. Im Hinblick darauf beschreibt die DE 100 38 430 A1 eine Motorhaube an einem Fahrzeug zur Aufnahme eines Aufpralls, mit einem Oberblech und einer Unterstruktur sowie mit wenigstens einer Tilgermasse als Trägheitsmasse und Schwingungstilger. In einem vorbestimmten Bereich der Motorhaube ist eine einen Zwischenraum zwischen dem Oberblech und der Unterstruktur ausfüllende Dämpfungsschicht vorgesehen, wobei besagte Tilgermasse in der Dämpfungsschicht oder auf der der Dämpfungsschicht abgewandten Seite der Unterstruktur angeordnet ist. Durch diese Maßnahme soll im besagten Bereich durch eine Verringerung der Schwingung der Beschleunigung des dort aus einem Impaktor und der Motorhaube gebildeten Schwingungssystems das Kopfverletzungskriterium (HIC) reduziert und das Energieaufnahmevermögen der Motorhaube erhöht werden. Die Dämpfungsschicht besteht dabei aus einem Schaumstoff, insbesondere aufgeschäumten harten Kunststoff, wie Polyurethan, und die Tilgermasse aus einem Stahlblech.

Insbesondere im Hinblick auf den letztbeschriebenen Stand der Technik (DE 100 38 430 A1) ist es Aufgabe der Erfindung, eine alternative Frontklappe für ein Fahrzeug, insbesondere Kraftfahrzeug, zu schaffen, welche leicht baut und dennoch einen möglichst niedrigen HIC-Wert zumindest in vorbestimmten Bereichen derselben aufweist. Ferner ist es Aufgabe der Erfindung, ein Fahrzeug, insbesondere Kraftfahrzeug, mit einer derartigen Frontklappe zur Verfügung zu stellen. Schließlich ist es Aufgabe der Erfindung, ein Verfahren zur Herstellung besagter Frontklappe anzugeben.

In der DE 100 38 430 A1 wird eine Motorhaube aus einem Oberblech und einer Unterstruktur offenbart, wobei auf der dem Oberblech abgewandten Seite der Unterstruktur eine Tilgermasse in Form eines Stahlblechs angeordnet ist, wobei diese Tilgermasse wiederum in eine Dämpfungsschicht aus Polyurethan eingebettet ist.

Die DE 10 2012 216 545 A1 betrifft ein Außenverkleidungsteil für ein Fahrzeug, das dreischichtig ausgestaltet ist. Neben einer Außenschicht aus einem faserverstärkten Kunstsoff, sind ein Kern aus einem energieabsorbierenden Material und eine Innenschicht aus einem verpressten mit Harz getränkten Vlies vorgesehen. Die EP 1 844 993 A1 betrifft eine Außenverkleidungsteil für ein Fahrzeug, das dreischichtig ausgestaltet ist. Neben einer Außenschicht sind ein Kern und eine Innenschicht vorgesehen.

Die CN 106 114 644 A zeigt ebenfalls eine Motorhaube. Diese Motorhaube umfasst eine Rippenstruktur, wobei zwischen den Rippen ein Füllmaterial eingefügt zu sein scheint. Dieses Füllmaterial besteht aus einem Epoxid-Mastixharzlack oder einem modifizierten Silikonharz.

Die DE 10 2008 034 132 A1 betrifft eine energieabsorbierende Motorhaube, die eine Vielzahl von vielflächigen Höckern aufweist.

Die EP 1 844 993 A1 betrifft eine Fronthaube und dessen Herstellungsverfahren, gemäß den Oberbegriff des Patentanspruchs 1 und 10, die eine Außenschicht, eine Kernschicht und einen Innenschicht aufweist, wobei die Innenschicht undurchlässig ist für Flüssigkeiten an der der Kernschicht zugewandten Seite.

Ausgehend von einer Frontklappe für ein Fahrzeug, insbesondere Kraftfahrzeug, welche Frontklappe ein Außenblech aufweist, wobei lokal in einem vorbestimmten Bereich oder im gesamten Bereich der Frontklappe unterhalb des Außenbleches mindestens eine Trägheitsmasse angeordnet ist, wird die gestellte Aufgabe dadurch gelöst, dass besagte Trägheitsmasse durch eine flexible Schwerschicht gebildet ist.

Durch den Einsatz einer Schwerschicht ist eine einfache und kostengünstige Maßnahme zur Abstimmung der Massenträgheit von Frontklappen oder von vorbestimmten Bereichen derselben zur Erzielung eines möglichst kleinen HIC-Wertes gefunden. In umfangreichen Versuchen zum Anmeldungsgegenstand hat sich nämlich überraschenderweise herausgestellt, dass besagte Schwerschicht, welche nach dem Stand der Technik in einem Feder-Masse-System, beispielsweise in Kombination mit einem Schaumstoff, in vielfältigen Ausführungsformen zum Entdröhnen (Minderung von Körperschall) von Bauteilen insbesondere auch in Kraftfahrzeugen verwendet wird (vgl. z.B. EP 1 057 694 A2 , EP 0 316 744 A2 , EP 0 253 376 A2), demgegenüber als Trägheitsmasse sehr gute Ergebnisse bei der Abstimmung der Massenträgheit von Frontklappen oder von vorbestimmten Bereichen derselben zur Erzielung eines möglichst kleinen HIC-Wertes erbringt. Im Wesentlichen wird hier zur Abstimmung besagter Massenträgheit eine flexible Masse eingesetzt, welches vorteilhafterweise zu keiner Steifigkeitserhöhung der Frontklappe führt.

Die Unteransprüche beschreiben bevorzugte Weiterbildungen oder Ausgestaltungen der Erfindung.

Bevorzugt ist besagte Trägheitsmasse in Form der flexiblen Schwerschicht als ein mattenartiges An- oder Einbaubauteil - Massepad - ausgebildet. Ein derartiges Massepad lässt sich einfach und kostengünstig herstellen und montieren und im Rahmen der Abstimmung der Massenträgheit beispielsweise durch Beschnitt an das gewünschte Ergebnis anpassen. Bevorzugt wird dabei das Massepad an der Unterseite des Außenbleches angebracht. Weiter bevorzugt wird das Massepad nach KTL am Außenblech angebracht. Unter KTL (KTL = kathodische Tauchlackierung) versteht die Fachwelt im Allgemeinen ein elektrochemisches Tauchlackierverfahren, bei dem die Lackabscheidung infolge von chemischen Umsetzungen eines Bindemittels erfolgt. Dieses Verfahren geht mit Prozesstemperaturen von mindestens 200 °C einher. Demgegenüber kann das Massepad auch in einen zwischen dem Außenblech und einer mit dem Außenblechverbundenen und dasselbe versteifenden Innenstruktur ausgebildeten Hohlraum eingebracht bzw. eingelegt und gehaltert sein. In diesem Fall erfolgt das Bestücken der Frontklappe mit dem Massepad bevorzugt vor KTL. Selbstverständlich muss in diesem Fall die Schwerschicht KTL-fähig sein. Dieser Umstand erfordert ein KTL-fähiges Massepad, welches demgemäß eine ausreichend hohe Temperaturbeständigkeit von mindestens 200 °C über wenigstens 40 Minuten sowie eine ausreichende Haftung am Außenblech bei einem Durchlauf von mindestens 160° über wenigstens 15 Minuten aufweist. Alternativ kann die Trägheitsmasse in Form der Schwerschicht auch in besagten Hohlraum zwischen Außenblech und Innenstruktur eingespritzt sein/werden und dort zu einer Masse abbinden, welche hoch flexibel ist und wie bereits oben dargetan, idealerweise keine zusätzliche Steifigkeit in die Struktur der Frontklappe einbringt. Auch diese Maßnahme wird bevorzugt vor KTL durchgeführt, sofern die eingespritzte Masse bzw. Schwerschicht KTL-fähig ist. Ein Einspritzen der Schwerschicht nach KTL ist selbstverständlich durch die Erfindung miterfasst. In diesem Fall ist es nicht Bedingung, dass die Schwerschicht KTL-fähig ist. Zumindest sollte die flexible Schwerschicht so ausgelegt sein, dass diese als angebrachtes bzw. eingelegtes Massepad oder als eingespritzte Masse die im Betrieb des Fahrzeugs üblicherweise im Motorraum desselben auftretenden Temperaturen ohne Veränderung ihrer Eigenschaften verträgt.

Erfindungsgemäß enthält die Trägheitsmasse in Form der flexiblen Schwerschicht Bitumenmasse, welche einfach zu verarbeiten und kostengünstig ist. Unter Bitumen wird im Allgemeinen ein sowohl natürlich vorkommendes als auch durch Vakuumdestilation aus Erdöl gewonnenes Gemisch aus verschiedenen organischen Stoffen verstanden. Bevorzugt weist eine derartige Schwerschicht eine Dichte von etwa 2,0 bis etwa 2,6 g/cm³ auf. Um der Bitumenmasse vorteilhafte Eigenschaften zu verleihen, insbesondere ein an sich über die Zeit zu erwartendes Verhärten und Verspröden der Bitumenmasse zu unterbinden sowie die gewünschte Elastizität der Bitumenmasse einzustellen, enthält diese bevorzugt Kunststoff. Besagter Kunststoff kann beispielsweise durch ein thermoplastisches Polymer, wie einem Copolymer, z.B. Polypropylen, gebildet sein.

Gemäß einer zweiten vorteilhaften Ausführungsform der Trägheitsmasse in Form der flexiblen Schwerschicht enthält diese eine biegeweiche Kunststoffmasse auf Kautschukbasis. Bevorzugt handelt es sich hierbei um einen Butylkautschuk, umgangssprachlich auch Butyl genannt. Weiter bevorzugt weist eine derartige Schwerschicht eine Dichte von etwa 2,0 bis etwa 2,2 g/cm³ auf. Um auch hier der Kunststoffmasse vorteilhafte Eigenschaften zu verleihen, insbesondere ein Verhärten oder Verspröden derselben zu unterbinden, enthält besagte Kunststoffmasse, insbesondere in Form des besagten Butylkautschuks Fremdkunststoff. Als Fremdkunststoffe sind beispielsweise thermoplastische Ealstomere und/oder Polyamidverbindungen einsetzbar.

Um die Bitumenmasse oder Kunststoffmasse der Schwerschicht in Form des mattenartigen An- oder Einbauteils - Massepad - zu stabilisieren, ist bevorzugt vorgesehen, dass diese auf ihrer Unterseite ein Flächenelement enthält oder aufweist. Besagtes Flächenelement kann beispielsweise durch eine Matte oder ein Vlies aus Kunst- oder Naturfasern, wie eine Glasfasermatte oder ein Glasfaservlies, durch eine oder mehrere Papierlagen oder dgl. mehr gebildet sein. Eine einfache und kostengünstige Maßnahme zur Befestigung des mattenartigen Anbauteils bzw. der mattenartigen Schwerschicht an der Unterseite des Außenblechs ergibt sich bevorzugt derart, dass die Schwerschicht auf ihrer Oberseite ein Klebemittel, beispielsweise einen selbstklebenden Acrylatkleber aufweist oder mit einem solchen appliziert wird. Die vorstehend näher beschriebene Trägheitsmasse in Form der flexiblen Schwerschicht eignet sich besonders gut, die Massenträgheit von Frontklappen aus Leichtmetall, insbesondere aus Aluminium oder einer Aluminiumlegierung im Hinblick auf einen möglichst niedrigen HIC-Wert abzustimmen. Die Erfindung beschränkt sich jedoch nicht auf den Werkstoff Aluminium bzw. besagte Aluminiumlegierung, sondern erfasst jedweden geeigneten Leichtbauwerkstoff, wie beispielsweise Magnesium, einen Kunststoff oder auch einen faserverstärkten Kunststoff.

Die Erfindung betrifft auch ein Fahrzeug, insbesondere Kraftfahrzeug, mit einer Frontklappe der vorbeschriebenen Art.

Das Verfahren zur Herstellung einer Frontklappe für ein Fahrzeug, insbesondere Kraftfahrzeug, welche Frontklappe ein Außenblech aufweist, wobei in einem vorbestimmten Bereich oder im gesamten Bereich der Frontklappe unterhalb des Außenbleches mindestens eine Trägheitsmasse angeordnet wird, zeichnet sich im Wesentlichen dadurch aus, dass als Trägheitsmasse eine flexible Schwerschicht verwendet wird, die vorteilhaft bei einfacher und kostengünstiger Herstellung und Verarbeitung eine komfortable und wirkungsvolle Abstimmung der Massenträgheit der Frontklappe im Hinblick auf die Erzielung eines möglichst niedrigen HIC-Wertes ermöglicht ohne die Frontklappe zusätzlich zu versteifen.

Nachstehend wird die Erfindung anhand der in den Zeichnungen schematisch dargestellten Ausführungsbeispiele näher erläutert. Sie ist jedoch nicht auf diese beschränkt, sondern erfasst alle durch die Patentansprüche definierten Ausgestaltungen. Es zeigen:
- Fig. 1: äußerst schematisch ein Fahrzeug in einer Seitenansicht mit einer erfindungsgemäß ausgebildeten Frontklappe,
- Fig. 2: eine schematische Schnittansicht der Frontklappe nach Fig.1, mit der Darstellung einer erfindungswesentlichen Trägheitsmasse der Frontklappe gemäß einer ersten Ausführungsvariante der Erfindung in Form eines Massepads (Schnitt "I-I" nach Fig.1 3,
- Fig. 3: eine Unteransicht der Frontklappe nach Fig. 2,
- Fig. 4: eine im Hinblick auf Fig.2 abgewandelte und als Massepad ausgebildete Trägheitsmasse,
- Fig. 5: eine zweite Ausführungsvariante der Erfindung,
- Fig. 6: ein Diagramm mit drei Beschleunigungs (a)-Zeit (t)-Kurven A, B', C', wobei die Kurve A ein Frontklappenblech aus Stahl und die Kurven B' und C' jeweils ein Frontklappenblech aus einer bestimmten Aluminiumlegierung mit einer erfindungswesentlichen Trägheitsmasse betreffen, und
- Fig. 7: ein Diagramm mit drei Beschleunigungs (a)-Zeit (t)-Kurven A, B, C, wobei die Kurve A ein Frontklappenblech aus Stahl und die Kurven B und C jeweils ein Frontklappenblech aus einer bestimmten Aluminiumlegierung ohne Trägheitsmasse betreffen (Stand der Technik).

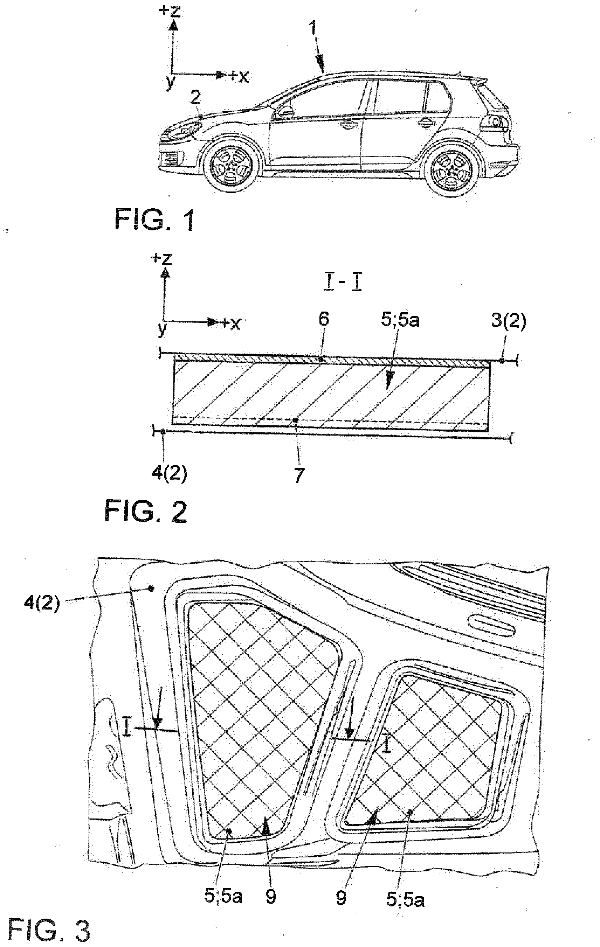

Fig. 1 zeigt ein Fahrzeug 1, vorliegend einen Personenkraftwagen, mit einer Frontklappe 2, welche gemäß diesem Ausführungsbeispiel aus Metallblech einer Aluminiumlegierung gefertigt ist. Die Erfindung beschränkt sich jedoch nicht auf den Werkstoff Aluminium bzw. besagte Aluminiumlegierung, sondern erfasst jedweden geeigneten Leichtbauwerkstoff, wie beispielsweise Magnesium, einen Kunststoff oder auch einen faserverstärkten Kunststoff. Gemäß den Figuren 2 bis 4 weist die Frontklappe 2 im geschlossenen Zustand derselben ein oben liegendes Außenblech 3 sowie eine darunter liegende und mit dem Außenblech 3 fest verbundene Innenstruktur 4 auf. Das Außenblech 3 und die Innenstruktur 4 sind dabei in ausgewählten Bereichen untereinander fest verbunden, beispielsweise verklebt. Die besagte Innenstruktur 4 dient im Wesentlichen der Versteifung der Frontklappe 2. Die Innenstruktur 4 kann als geschlossenes Flächenteil mit gegebenenfalls Versteifungssicken (nicht zeichnerisch dargestellt) oder dgl. ausgebildet sein. Alternativ kann dieses in vorbestimmten Bereichen zumindest eine Ausnehmung 9 aufweisen (3). Darüber hinaus ist die Innenstruktur 4 in vorbestimmten Bereichen beabstandet zum Außenblech 3 angeordnet. Die vorbestimmten Bereiche, gebildet durch besagte Ausnehmung/en 9 in der Innenstruktur 4 und/oder durch besagte Beabstandung/en, sind unter anderem auch dort vorgesehen, wo im Falle einer etwaigen Kollision des Fahrzeugs 1 mit einem Fußgänger derselbe im Ergebnis umfangreicher Versuche voraussichtlich mit seinem Kopf aufschlagen würde.

Um die schädlichen Auswirkungen dieser Kollision für den betreffenden Fußgänger wenigstens wirkungsvoll zu minimieren, ist zumindest in den besagten vorbestimmten Bereichen unterhalb des Außenbleches 3 an demselben mindestens eine Trägheitsmasse 5 angeordnet. Vorliegend ist die Trägheitsmasse 5 durch eine flexible Schwerschicht 5a, 5b gebildet.

### Ausführungsvariante 1 (Fig. 2 bis 4):

Gemäß den Figuren 2 und 3 ist die flexible Schwerschicht 5a als mattenartiges Anbauteil - Massepad - ausgebildet und weist auf ihrer Oberseite ein Klebemittel 6 auf oder ist mit einem solchen appliziert, um im Bereich einer Ausnehmung 9 an der Unterseite des Außenbleches 3 befestigt zu werden. In Figur 3 sind lediglich beispielgebend zwei Ausnehmungen 9 gezeigt, in welchen je ein Massepad der Schwerschicht 5a angeordnet ist. Das Klebemittel 6 ist beispielsweise durch einen selbstklebenden Acrylatkleber gebildet.

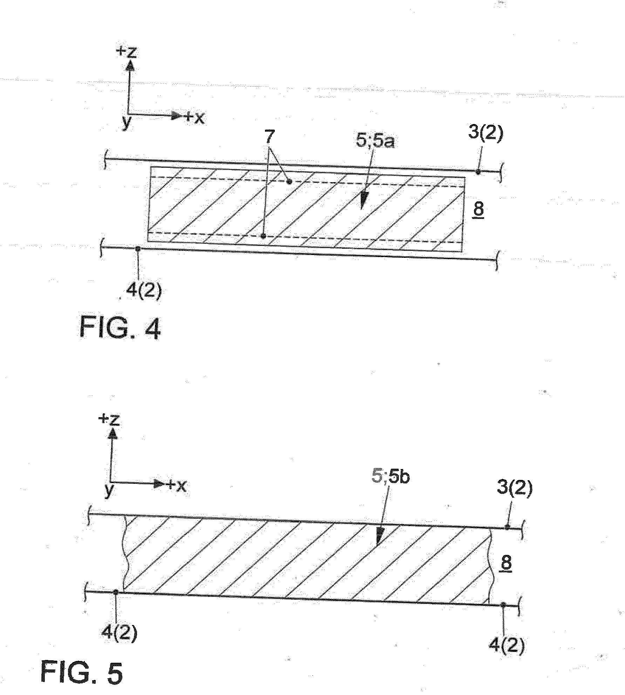

Figur 4 zeigt demgegenüber eine flexible Schwerschicht 5a in Form eines Massepads, welches als mattenartiges Einbauteil in einem zwischen den Außenblech 3 und der Innenstruktur 4 gebildeten Hohlraum 8 eingebracht bzw. eingelegt ist. Gemäß diesem Ausführungsbeispiel wurde auf ein Verkleben des Massepads verzichtet, kann jedoch selbstverständlich vorgesehen werden, sofern dieses für zweckmäßig erachtet wird.

Gemäß einer bevorzugten ersten Ausführungsform dieser ersten Ausführungsvariante enthält die Schwerschicht 5a Bitumenmasse und weist eine Dichte von 2,0 bis 2,6 g/cm³ auf. Die Erfindung beschränkt sich jedoch nicht auf diese Dichteangabe, sondern erfasst auch hiervon abweichende Dichtewerte, bevorzugt jedoch zum Höheren. Um der Bitumenmasse vorteilhafte Eigenschaften zu verleihen, insbesondere ein Verhärten oder Verspröden der Bitumenmasse zu unterbinden sowie eine bestimmte Elastizität bzw. Flexibilität der Bitumenmasse einzustellen, weist diese weiter bevorzugt Kunststoff auf. Besagter Kunststoff kann beispielsweise durch ein Copolymer wie beispielsweise Polypropylen gebildet sein.

Um die Bitumenmasse in Form des mattenartigen Anbauteils - Massepads - insbesondere bei hohen Temperaturen während des Verbaus derselben in den Fahrzeugrohbau zu stabilisieren, ist bevorzugt vorgesehen, dass diese zumindest auf ihrer Unterseite ein Flächenelement 7 enthält oder aufweist. Besagtes Flächenelement 7 kann beispielsweise durch eine Matte oder ein Vlies aus Kunst- oder Naturfasern, wie durch eine Glasfasermatte oder ein Glasfaservlies gebildet sein, welche/s Matte oder das Vlies dann sozusagen von einer Bitumenmatrix durchsetzt sind (2 und 4). Alternativ können auch eine oder mehrere Papierlagen oder dgl. mehr als unterer Abschluss der Schwerschicht 5a vorgesehen sein (nicht zeichnerisch dargestellt).

Es versteht sich für den Fachmann sicherlich von selbst und ist durch die Erfindung mit erfasst, dass nicht nur eine Lage Massepads vorgesehen sein kann, sondern zumindest bereichsweise auch zwei oder mehr Lagen übereinander angeordnet sein können, um im Hinblick auf einen möglichst kleinen HIC-Wert eine optimale Abstimmung der Massenträgheit von Frontklappen 2 zu ermöglichen (nicht zeichnerisch dargestellt).

In Versuchen zum Anmeldungsgegenstand hat sich zum vorstehend beschriebenen Massepad mit Bitumenmasse beispielhaft folgende Zusammensetzung bewährt:

| | |
|---|---|
| - Mischung von Bitumen | 8-20% |
| - Thermoplastische Polymere | 15-20% |
| - Kautschuke | 2-6% |
| - Mineralische Füllstoffe | 5-10% |
| - Schwerfüllstoffe, wie Eisenoxid | 38-50% |
| - Modifikatoren und Stabilisatoren | 8-12% |

Die vorstehende Zusammensetzung erlaubt die Herstellung eines Massepads mit insbesondere folgenden Parametern:
• - Dichte: 2,0-2,6 g/cm³
• - Dicke: 2-6 mm
• - Flächengewicht: 4-16 Kg/m²
• - Wärmestabilität 210°C bei senkrechter sowie Über-Kopf-Position über 45 min
• - hohe Kälteflexibilität
• - Beständigkeit gegen wässrige und alkoholische Lösungen, verdünnte Säuren und Laugen
• - langfristige funktionelle Dämmungs- und Dämpfungseigenschaften

Ein derartiges bitumenbasierendes Massepad weist nach Modifikation durch polymerische Anteile, entsprechende Füllstoffe und funktionelle Hilfsmittel somit eine gute Flexibilität, Wärmestabilität sowie langfristige Korrosionsschutzfunktion auf. Durch die Verwendung eines hochwertigen Haftklebstoffes auf Basis des besagten Akrylats ist eine gute Haftung auch auf geschmiertem oder geöltem Aluminiumblech ermöglicht.

Gemäß einer zur vorbeschriebenen alternativen, zweiten Ausführungsform der besagten ersten Ausführungsvariante enthält die Schwerschicht 5a eine biegeweiche Kunststoffmasse auf Kautschukbasis. Bevorzugt handelt es sich hierbei um einen Butylkautschuk, umgangssprachlich auch Butyl genannt. Weiter bevorzugt weist die besagte Kunststoffmasse eine Dichte von etwa 2,0 bis etwa 2,2 g/cm³ auf. Die Erfindung beschränkt sich jedoch nicht auf diesen konkret beschriebene Dichteangabe, sondern erfasst auch hiervon abweichende Dichtewerte, bevorzugt jedoch zum Höheren. Um auch hier der Kunststoffmasse vorteilhafte Eigenschaften zu verleihen, insbesondere ein Verhärten oder Verspröden derselben zu unterbinden, weist besagte Kunststoffmasse, insbesondere in Form des Butylkautschuks, Fremdkunststoff auf. Als Fremdkunststoff sind beispielsweise thermoplastische Elastomere und/oder Polyamidverbindungen einsetzbar. In Anlehnung an die vorstehend beschriebene erste Ausführungsform kann vorgesehen sein, dass auch die Kunststoffmasse auf ihrer Unterseite ein Flächenelement 7 der vorbeschriebenen Art enthält oder aufweist, um die Kunststoffmasse zu stabilisieren.

In Versuchen zum Anmeldungsgegenstand hat sich zu diesem Massepad mit biegeweicher Kunststoffmasse beispielhaft folgende Zusammensetzung bewährt:

| | |
|---|---|
| - fester thermo-elastischer Butylkautschuken | 3-7% |
| - flüssige oligomerische und niedermolekulare Butylverbindungen | 10-16% |
| - thermoplastische Elastomere | 4-10% |
| - thermoplastische Polyamidverbindungen | 1-3% |
| - Kunststoff-Harze | 4-8% |
| - schwere Füllstoffe | 50-65% |
| - Stabilisatoren und Pigmente | 3-5% |
| - Thixotropierungsmaterialien | 2-5% |

Die vorstehende Zusammensetzung erlaubt die Herstellung eines Massepads mit insbesondere folgenden Parametern:
• - Dichte: 2,0-2,2 g/cm³
• - Dicke: 2-6 mm
• - Flächengewicht: 4-13 Kg/m²
• - Wärmestabilität 210°C bei senkrechter sowie Über-Kopf-Position über 45 min
• - Haftung auf geölten Substraten,
• - Beständigkeit gegen wässrige und alkoholische Lösungen, verdünnte Säuren und Laugen

Ein derartiges Massepad weist selbsthaftende sowie thermoplastische Eigenschaften auf. Nach dem Einbau und Durchlauf durch den Standard-Fahrzeugherstellungsprozess wirkt dieses wie ein Elastomer. Im Wesentlichen sind lediglich die Wirkung der Masse sowie Dämmeffekte zu verzeichnen. Rein versteifende und dämpfende Effekte sind dagegen nicht zu verzeichnen.

### Ausführungsvariante 2 (Fig. 5):

Diese Ausführungsvariante unterscheidet sich zu vorstehenden im Wesentlichen dadurch, dass gemäß Figur 5 die durch eine Bitumen- oder Kunststoffmasse gebildete Schwerschicht 5b nicht als Massepad bereitgestellt wird, sondern in einen durch Beabstandung zwischen dem Außenblech 3 und der Innenstruktur 4 gebildeten Hohlraum 8 als zähe Masse eingespritzt wird, dort durch Adhäsion anhaftet und nachfolgend zu einer flexiblen Trägheitsmasse 5 abbindet. Deren Eigenschaften können ebenfalls durch bestimmte Anteile an Inhaltsstoffen (s. oben) in weiten Grenzen eingestellt werden.

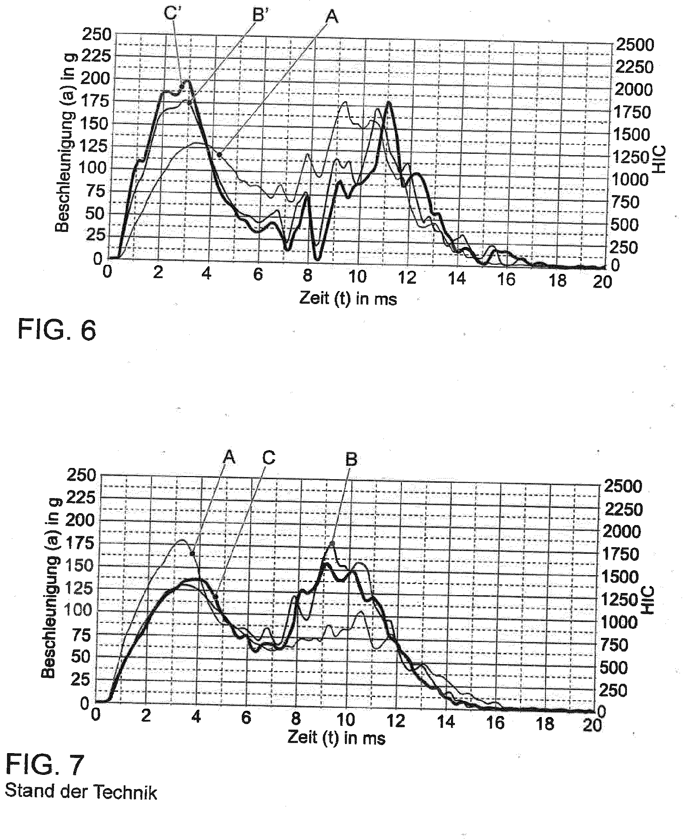

Fig. 6 zeigt lediglich beispielgebend ein Diagramm mit drei Beschleunigungs (a)-Zeit (t)-Kurven A, B', C', auch als Kopfimpaktorverzögerungskurven bezeichnet, wobei die Kurve A ein Frontklappenblech aus Stahl (Stand der Technik) und die Kurven B' und C' jeweils ein Frontklappenblech aus beispielsweise einer bestimmten Aluminiumlegierung mit zumindest einer Trägheitsmasse 5 der erfindungsgemäßen Art betreffen. Im Vergleich mit dem Stand der Technik (7) ist danach für die Frontklappenbleche aus einer Aluminiumlegierung mit Trägheitsmasse/n 5 der erfindungsgemäßen Art ersichtlich, dass ein erster Beschleunigungspeak der Kurven B', C' zur in Rede stehenden Frontklappe 2 aus besagter Aluminiumlegierung auf ein optimales Niveau (bevorzugt ähnlich hoch wie bei einer Frontklappe 2 aus Stahl) zum Abbremsen des Kopfimpaktors angehoben ist, vorliegend sogar darüber hinaus reicht. Es ergibt sich ein optimaler Beschleunigungsverlauf (1. Beschleunigungspeak 2/3 und 2. Beschleunigungspeak 1/3 hoch). Hieraus resultiert für die Frontklappenbleche aus einer beispielsweise eingesetzten Aluminiumlegierung mit Trägheitsmasse 5 der vorbeschriebenen Art ein besserer HIC-Wert mit weniger Deformationsweg der Frontklappe 2 als herkömmlich. Darüber hinaus ist herauszustellen, dass die nach der Erfindung festgestellte Gesamtmasse aus dem Alu-Blech samt Trägheitsmasse 5 (Schwerschicht 5a, 5b) deutlich geringer ist als eine Stahl-Referenz, bei gleicher Performance hinsichtlich HIC und Deformationsweg.

Was die Anbindung der erfindungsgemäß ausgebildeten Trägheitsmasse 5 (Schwerschicht 5a, 5b) an die Frontklappe 2 des Fahrzeugs 1 anbelangt, können sich bezüglich des oben beschriebenen Prozessschrittes KTL (KTL = kathodische Tauchlackierung) und in Abhängigkeit der besonderen Ausbildung der Trägheitsmasse 5 als Schwerschicht 5a bzw. Massepad oder als ein- bzw. angespritzte Schwerschicht 5b beispielsweise folgende Verarbeitungsreihenfolgen ergeben.

So kann z.B. vorgesehen sein, dass die Trägheitsmasse 5 in Form zumindest eines Massepads (Schwerschicht 5a) zunächst an das Außenblech 3 gefügt, bevorzugt geklebt und nachfolgend die Innenstruktur 4 an das Außenblech 3 geklebt wird. Das Massepad liegt nunmehr zwischen dem Außenblech 3 und der Innenstruktur 4 (vgl. 2-4), beispielsweise im Bereich einer Ausnehmung 9 der Innenstruktur 4 (3). Im Anschluss daran wird die gesamte Frontklappe 2 dem KTL-Prozess zugeführt.

Demgegenüber kann auch vorgesehen sein, dass nachdem die Frontklappe 2 einen KTL-Prozess durchlaufen hat, spritzfähige Trägheitsmasse 5 (Schwerschicht 5b) in einen zwischen dem Außenblech 3 und der Innenstruktur 4 ausgebildeten Hohlraum 8 eingespritzt wird (vgl. 5).

### Bezugszeichenliste:

- 1: Fahrzeug
- 2: Frontklappe
- 3: Außenblech
- 4: Innenstruktur
- 5: Trägheitsmasse
- 5a: Schwerschicht
- 5b: Schwerschicht
- 6: Klebemittel
- 7: Flächenelement
- 8: Hohlraum
- 9: Ausnehmung
- A: a-t-Kurve Frontklappenblech (Stahl)
- B: a-t-Kurve Frontklappenblech (Alu-Legierung)
- B': a-t-Kurve Frontklappenblech (Alu-Legierung zzgl. Schwerschicht 5a, 5b)
- C: a-t Kurve Frontklappenblech (Alu-Legierung)
- C': a-t-Kurve Frontklappenblech (Alu-Legierung zzgl. Schwerschicht 5a, 5b)

## Patentansprüche

1. Frontklappe (2) für ein Fahrzeug (1), insbesondere Kraftfahrzeug, welche Frontklappe (2) ein Außenblech (3) aufweist, wobei in einem vorbestimmten Bereich oder im gesamten Bereich der Frontklappe (2) unterhalb des Außenbleches (3) mindestens eine Trägheitsmasse (5) angeordnet ist, wobei besagte Trägheitsmasse (5) durch eine flexible Schwerschicht (5a, 5b) gebildet ist, **dadurch gekennzeichnet, dass** die Trägheitsmasse (5) in Form der Schwerschicht (5a, 5b) Bitumenmasse enthält, und dass die Kunststoffmasse überdies Fremdkunststoff enthält.

2. Frontklappe (2) nach Anspruch 1, **dadurch gekennzeichnet, dass** die Trägheitsmasse (5) in Form der Schwerschicht (5a) als ein mattenartiges An- oder Einbaubauteil - Massepad - ausgebildet ist oder dass die Trägheitsmasse (5) in Form der Schwerschicht (5b) in einen gebildeten Hohlraum (8) zwischen dem Außenblech (3) und einer mit dem Außenblech (3) verbundenen und dasselbe versteifenden Innenstruktur (4) eingespritzt ist und dort abbindet.

3. Frontklappe (2) nach Anspruch 1, **dadurch gekennzeichnet, dass** die Schwerschicht (5a, 5b) eine Dichte von 2,0 bis 2,6 g/cm³ aufweist.

4. Frontklappe (2) nach Anspruch 1 oder 3, **dadurch gekennzeichnet, dass** die Bitumenmasse Kunststoff enthält.

5. Frontklappe (2) nach Anspruch 1 oder 2, **dadurch gekennzeichnet, dass** die Trägheitsmasse (5) in Form der Schwerschicht (5a, 5b) eine biegeweiche Kunststoffmasse auf Kautschukbasis enthält.

6. Frontklappe (2) nach Anspruch 5, **dadurch gekennzeichnet, dass** die Schwerschicht (5a, 5b) eine Dichte von 2,0 bis 2,2 g/cm³ aufweist.

7. Frontklappe (2) nach einem der vorhergehenden Ansprüche, **dadurch gekennzeichnet, dass** die Schwerschicht (5a) als mattenartiges An- oder Einbauteil - Massepad - auf ihrer Unterseite ein Flächenelement (7) zur Stabilisierung der Bitumenmasse oder Kunststoffmasse enthält oder aufweist und/oder zumindest auf ihrer Oberseite ein Klebemittel (6) zur Befestigung der Schwerschicht (5a) an der Unterseite des Außenblechs (3) aufweist.

8. Frontklappe (2) nach einem der Ansprüche 1 bis 7, **dadurch gekennzeichnet, dass** zumindest das Außenblech (3) aus Aluminium oder einer Aluminiumlegierung, aus Magnesium, aus Kunststoff, aus einem faserverstärkten Kunststoff oder einem anderen geeigneten Leichtbauwerkstoff besteht.

9. Fahrzeug (1), insbesondere Kraftfahrzeug, mit einer Frontklappe (2) nach einem der Ansprüche 1 bis 8.

10. Verfahren zur Herstellung einer Frontklappe (2) für ein Fahrzeug (1), insbesondere Kraftfahrzeug, welche Frontklappe (2) ein Außenblech (3) aufweist, wobei in einem vorbestimmten Bereich oder im gesamten Bereich der Frontklappe (2) unterhalb des Außenbleches (3) mindestens eine Trägheitsmasse (5) angeordnet wird, **dadurch gekennzeichnet, dass** als Trägheitsmasse (5) eine flexible Schwerschicht (5a, 5b) verwendet wird, und dass die Trägheitsmasse (5) in Form der Schwerschicht (5a, 5b) Bitumenmasse enthält, und dass die Kunststoffmasse überdies Fremdkunststoff enthält.

## Claims

1. Front flap (2) for a vehicle, in particular motor vehicle, which front flap (2) has an external sheet (3), where in a predetermined region or in the entire region of the front flap (2) there is at least one inertial mass (5) arranged underneath the external sheet (3), where the said inertial mass (5) is formed by a flexible heavy layer (5a, 5b), **characterized in that** the inertial mass (5) in the form of the heavy layer (5a, 5b) comprises bitumen composition, and that the plastics composition moreover comprises foreign plastic.

2. Front flap (2) according to Claim 1, **characterized in that** the inertial mass (5) in the form of the heavy layer (5a) is configured as an add-on component or installation component respectively of mat type - mass pad - , or that the inertial mass (5) in the form of the heavy layer (5b) has been applied through a nozzle into, and sets in, a cavity (8) formed between the external sheet (3) and an internal structure (4) bonded to the external sheet (3) and stiffening the same.

3. Front flap (2) according to Claim 1, **characterized in that** the density of the heavy layer (5a, 5b) is 2.0 to 2.6 g/cm³.

4. Front flap (2) according to Claim 1 or 3, **characterized in that** the bitumen composition comprises plastic.

5. Front flap (2) according to Claim 1 or 2, **characterized in that** the inertial mass (5) in the form of the heavy layer (5a, 5b) comprises a flexible plastics composition based on rubber.

6. Front flap (2) according to Claim 5, **characterized in that** the density of the heavy layer (5a, 5b) is 2.0 to 2.2 g/cm³.

7. Front flap (2) according to any of the preceding claims, **characterized in that** the heavy layer (5a) in the form of add-on component or installation component respectively of mat type - mass pad - comprises, or has, on its underside, an areal element (7) for the stabilization of the bitumen composition or plastics composition, and/or has, at least on its upper side, an adhesive (6) for the securing of the heavy layer (5a) on the underside of the external sheet (3).

8. Front flap (2) according to any of Claims 1 to 7, **characterized in that** at least the external sheet (3) consists of aluminium or of an aluminium alloy, of magnesium, of plastic, of a fibre-reinforced plastic or of another suitable lightweight construction material.

9. Vehicle (1), in particular motor vehicle, with a front flap (2) according to any of Claims 1 to 8.

10. Process for the production of a front flap (2) for a vehicle (1), in particular motor vehicle, which front flap (2) has an external sheet (3), where in a predetermined region or in the entire region of the front flap (2) there is at least one inertial mass (5) arranged underneath the external sheet (3), **characterized in that** a flexible heavy layer (5a, 5b) is used as inertial mass (5), and that the inertial mass (5) in the form of the heavy layer (5a, 5b) comprises bitumen composition, and that the plastics composition moreover comprises foreign plastic.

## Revendications

1. Capot avant (2) pour un véhicule (1), en particulier un véhicule automobile, ledit capot avant (2) présentant une tôle extérieure (3), au moins une masse d'inertie (5) étant disposée dans une zone prédéterminée ou dans toute la zone du capot avant (2) au-dessous de la tôle extérieure (3), ladite masse d'inertie (5) étant formée par une couche lourde flexible (5a, 5b), **caractérisé en ce que** la masse d'inertie (5) sous la forme de la couche lourde (5a, 5b) contient une composition bitumeuse, et **en ce que** la masse de matière plastique contient de plus une matière plastique étrangère.

2. Capot avant (2) selon la revendication 1, **caractérisé en ce que** la masse d'inertie (5) sous la forme de la couche lourde (5a) est réalisée comme une pièce rapportée ou incorporée de type tapis, bloc de masse, ou **en ce que** la masse d'inertie (5) sous la forme de la couche lourde (5b) est injectée et durcit dans une cavité (8) formée entre la tôle extérieure (3) et une structure intérieure (4) reliée à et renforçant la tôle extérieure (3).

3. Capot avant (2) selon la revendication 1, **caractérisé en ce que** la couche lourde (5a, 5b) présente une densité de 2,0 à 2,6 g/cm³.

4. Capot avant (2) selon la revendication 1 ou 3, **caractérisé en ce que** la composition bitumeuse contient de la matière plastique.

5. Capot avant (2) selon la revendication 1 ou 2, **caractérisé en ce que** la masse d'inertie (5) sous la forme de la couche lourde (5a, 5b) contient une masse de matière plastique souple à base de caoutchouc.

6. Capot avant (2) selon la revendication 5, **caractérisé en ce que** la couche lourde (5a, 5b) présente une densité de 2,0 à 2,2 g/cm³.

7. Capot (2) selon l'une quelconque des revendications précédentes, **caractérisé en ce que** la couche lourde (5a) sous la forme d'une pièce rapportée ou incorporée de type tapis, bloc de masse, contient ou présente sur sa face inférieure un élément de surface (7) pour stabiliser la composition bitumeuse ou la masse de matière plastique, et/ou présente au moins sur sa surface supérieure un adhésif (6) pour fixer la couche lourde (5a) à la surface inférieure de la tôle extérieure (3).

8. Capot avant (2) selon l'une quelconque des revendications 1 à 7, **caractérisé en ce qu'**au moins la tôle extérieure (3) est composée d'aluminium ou d'un alliage d'aluminium, de magnésium, de matière plastique, d'une matière plastique renforcée par des fibres ou d'un autre matériau léger adapté.

9. Véhicule (1), en particulier véhicule automobile, muni d'un capot avant (2) selon l'une quelconque des revendications 1 à 8.

10. Procédé de fabrication d'un capot avant (2) pour un véhicule (1), en particulier un véhicule automobile, ledit capot avant (2) présentant une tôle extérieure (3), au moins une masse d'inertie (5) étant disposée dans une zone prédéterminée ou dans toute la zone du capot avant (2) au-dessous de la tôle extérieure (3) **caractérisé en ce qu'**une couche lourde flexible (5a, 5b) est utilisée pour la masse d'inertie (5) et **en ce que** la masse d'inertie (5) sous la forme de la couche lourde (5a, 5b) contient une composition bitumeuse, et **en ce que** la masse de matière plastique contient de plus une matière plastique étrangère.
